# EUROPÄISCHE PATENTANMELDUNG

(11) **EP 2 018 951 A2**
(43) Veröffentlichungstag der Anmeldung: **28.01.2009**
(21) Anmeldenummer: 08009889.0
(22) Anmeldetag: 30.05.2008
(51) Int. Cl.: B29C 65/08, B29C 65/60, B06B 3/00

(54) **Ultraschallschweißsonotrode**

(30) Priorität: 29.06.2007 DE 202007009145 U
(71) Anmelder: Atlanta-Elektrosysteme GmbH, 98587 Steinbach-Hallenberg (DE)
(72) Erfinder: Lutter, Rolf, 98527 Suhl (DE); Stolle, Wolfgang, 98817 Meiningen (DE); Spigaht, Dietrich, 98529 Suhl (DE)
(74) Vertreter: Kötter, Ulrich

(57) **Zusammenfassung**

Die Erfindung betrifft eine Sonotrode (1) zur Ultraschallverschweißung von thermoplastischen Werkstücken mit Schweißzapfen (22), wobei in die Sonotrode (1) im Bereich ihrer bei dem Schweißvorgang auf der Oberfläche der zu verbindenden Werkstücke zugewandten Arbeitsfläche eine nach außen sich erweiternde kegelförmigen Aussparung (13) eingebracht ist.

## Beschreibung

Die Erfindung betrifft eine Sonotrode zur Ultraschallverschweißung von thermoplastischen Werkstücken mit im Wesentlichen zylinderförmigen Schweißzapfen.

Als schnelles Verbindungsverfahren, welches reproduzierbare Ergebnisse liefert, hat sich Ultraschallschweißen bei der Herstellung thermoplastischer Werkstücke in der Serienproduktion in großem Umfang bewehrt. Bei diesem Fügeverfahren werden die thermoplastischen Werkstücke mittels eines auf den zu verbindenden Werkstücken aufgesetzten Schallemitters, der sogenannten Sonotrode, in mechanische Schwingung versetzt, wobei durch den gleichzeitig über die Sonotrode aufgebrachten Druck das thermoplastische Material sich in Folge der Reibungswärme im Nahtbereich plastifiziert. Nach kurzer Haltezeit entsteht dann eine homogene Verbindung hoher Festigkeit.

Auch zur Verbindung von metallischen Werkstücken mit Werkstücken aus thermoplastischen Materialien hat sich das Ultraschallschweißen bewährt. Beispielsweise werden zur Befestigung von metallischen Bürstenführungen auf Kunststoffbürstenplatten auf den Bürstenplatten angeordnete Schweißzapfen durch gelochte Laschen der metallischen Bürstenführung gesteckt. Anschließend werden die Schweißzapfen mit Hilfe einer Sonotrode aufgeschmolzen und in pilzförmiger Gestalt plastifiziert, so dass zwischen der Bürstenplatte und der gelochten Lasche der Bürstenführung eine formschlüssige Verbindung erzielt ist.

Zur Erstellung derartiger formschlüssiger Verbindungen sind im Stand der Technik unterschiedliche Sonotrodenformen bekannt. So kommen insbesondere Sonotroden mit kalottenförmigen Ausformungen, eben ausgestaltete Sonotroden mit geriffelter oder glatter Oberfläche oder auch abgestufte Sonotroden zum Einsatz. Nachteilig bei den bekannten Sonotrodenformen ist, dass es beim Ultraschallschweißprozess zu unliebsamen "Flitterbildungen" kommt, wodurch eine Abweichung vom Idealbild des umgeformten Zapfens bewirkt ist.

Diese Flitterbildung führt in der Folge zu einem erheblichen Mehraufwand durch Nachkontrolle und Beseitigung der Flitter. Ursache für diese "Flitterbildung" sind beispielsweise Toleranzen in der Gestaltung der Kunststoffbürstenplatten, insbesondere bezüglich der Achsabstände der Schweißzapfen zur Sonotrode oder Höhenmaßtoleranzen der Schweißzapfen durch unebene Werkstücke. Hierdurch kommt es zu unterschiedlich großen verdrängten Kunststoffvolumina, welche für die "Flitterbildung" direkt verantwortlich sind.

Hier will die Erfindung Abhilfe schaffen. Der Erfindung liegt die Aufgabe zu Grunde, eine Sonotrode zur Ultraschallverschweißung von thermoplastischen Werkstücken mit Schweißzapfen zu schaffen, bei der Flitterbildungen im Schweißprozess vermieden werden. Gemäß der Erfindung wird diese Aufgabe durch die Merkmale des kennzeichnenden Teils des Schutzanspruchs 1 gelöst.

Durch die kegelförmige Ausbildung wird weniger Kunststoff "aufgeschmolzen" und die Höhentoleranzen sowie ein möglicher Achsversatz wird weitgehend kompensiert, so dass in der Folge eine "Flitterbildung" vermieden wird.

Mit der Erfindung ist eine Sonotrode zur Ultraschallverschweißung von thermoplastischen Werkstücken mit Schweißzapfen geschaffen, bei der Flitterbildungen im Schweißprozess vermieden werden.

In Weiterbildung der Erfindung ist die kegelförmige Aussparung zentriert in die Sonotrode eingebracht. Hierdurch ist ein homogenes Schweißverhalten erzielt.

In Weiterbildung der Erfindung geht die kegelförmige Aussparung an ihrem Grund in eine Sackbohrung über. Hierdurch ist eine zylinderförmige Kopfform des verschweißten Schweißzapfens bewirkt. Durch andere Gestaltungen des Hohlkegelgrundes, beispielsweise in Kugel- oder Prismaformen sind alternative Gestaltungen des geschweißten Schweißzapfens erzielbar.

In weiterer Ausgestaltung der Erfindung ist der Hohlkegel an seinem nach außen gerichteten Ende von einem umlaufenden Steg mit rechteckigem Querschnitt begrenzt. Hierdurch ist ein umlaufender Begrenzungsrand des verschweißten Schweißzapfens bewirkt.

Vorteilhaft ist die kegelförmige Aussparung hinsichtlich Höhe, Winkel und Durchmesser derart ausgebildet, dass er zu Beginn des Schweißvorgangs tangential an dem Rand des zu verschweißenden Schweißzapfens anliegt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

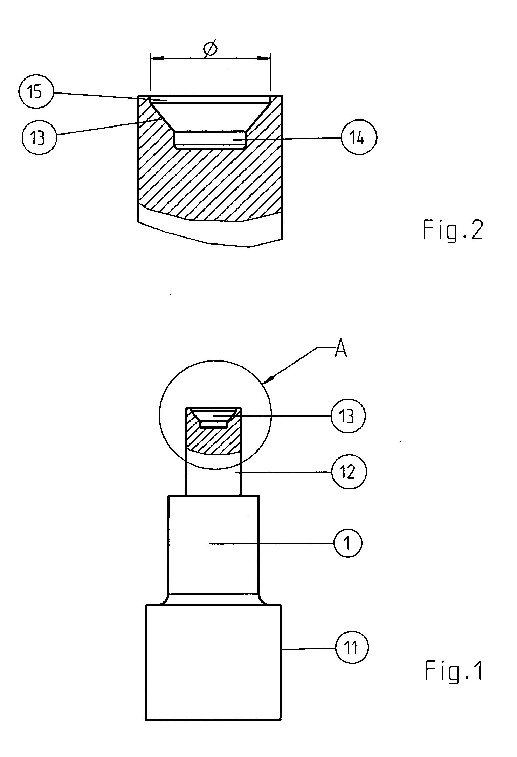

- Fig. 1: eine Sonotrode zur Ultraschallverschweißung in Teilschnittdarstel- lung;
- Fig. 2: die Detailansicht des Bereichs A aus Fig. 1;
- Fig. 3: die Darstellung einer Bürstenplatte mit einer mit dieser zu verbin- denden Bürstenführung;
- Fig. 4: die schematische Darstellung des Schweißvorgangs zur Verbin- dung von Bürstenplatte und Bürstenführung aus Fig. 3 mittels der Sonotrode aus Fig. 1 und
- Fig. 5: die Detailansicht des Bereichs B aus Fig. 4.

Die als Ausführungsbeispiel gewählte Sonotrode 1 ist aus einer Titanlegierung hergestellt. Sie besteht im Wesentlichen aus einem am Ultraschallgenerator einer Ultraschallschweißeinheit ankoppelbaren Schaftabschnitt 11 mit kreisförmigem Querschnitt, welcher in einem stufigen ausgebildeten Sonotrodenabschnitt 12 mit ebenfalls kreisförmigem Querschnitt übergeht. An seinem äußeren Ende ist in den Sonotrodenabschnitt 12 zentriert zu seiner Rotationsachse eine kegelförmige Aussparung 13 eingebracht, welche in eine zylinderförmig ausgebildete Ausbuchtung 14 mündet. An ihrem nach außen gerichteten Ende ist die kegelförmige Aussparung 13 von einem umlaufenden Steg 15 mit rechteckigem Querschnitt begrenzt.

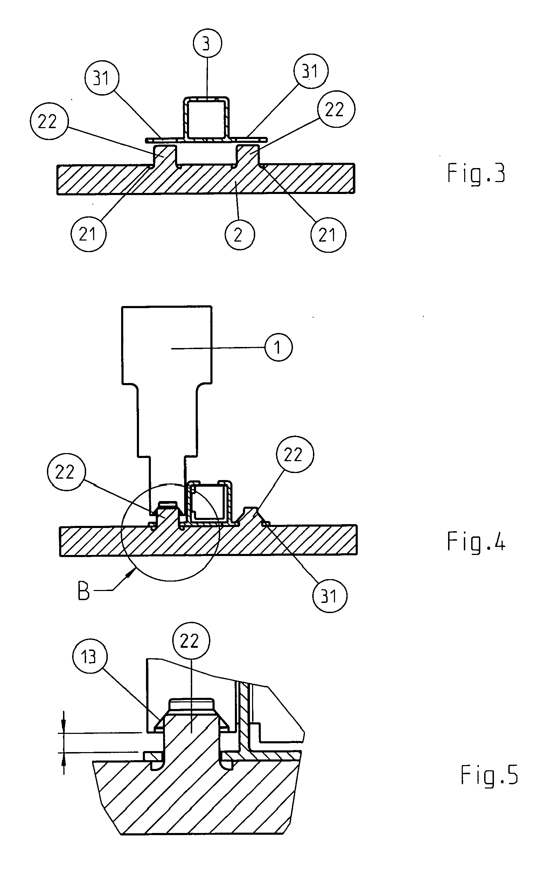

Zur formschlüssigen Befestigung einer Bürstenführung 3 auf einer Bürstenplatte 2 ist die Bürstenplatte 2 mit Schweißzapfen 22 versehen, an deren Grund eine Auskehlung 21 eingebracht ist. Die Bürstenführung 3 weist gelochte Laschen 31 auf, welche auf die Schweißzapfen 22 aufsteckbar sind. Nach Durchstecken der Schweißzapfen 22 durch die gelochten Laschen 31 der Bürstenführung 3 wird die Sonotrode 1 derart auf die Schweißzapfen 22 aufgesetzt, dass die Ränder der zylinderförmig ausgebildeten Schweißzapfen 22 tangential an der kegelförmigen Aussparung 13 der Sonotrode 3 anliegen. Die Sonotrode wird in Richtung Bürstenplatte verfahren, wobei der Schweißzapfen 22 aufgeschmolzen und in eine Pilzkopfform plastifiziert wird, welche die gelochte Lasche 31 der Bürstenführung 3 überragt (vgl. Fig. 4).

## Patentansprüche

1. Sonotrode zur Ultraschallverschweißung von thermoplastischen Werkstücken mit Schweißzapfen, **dadurch gekennzeichnet, dass** in die Sonotrode (1) im Bereich ihrer bei dem Schweißvorgang auf der Oberfläche der zu verbindenden Werkstücke (2, 3) zugewandten Arbeitsfläche eine nach außen sich erweiternden kegelförmige Aussparung (13) eingebracht ist.

2. Sonotrode nach Anspruch 1, **dadurch gekennzeichnet, dass** die kegelförmige Aussparung (13) zentriert in die Sonotrode (1) eingebracht ist.

3. Sonotrode nach Anspruch 1 oder 2, **dadurch gekennzeichnet, dass** die kegelförmige Aussparung (13) an ihrem Grund in eine hohlzylindrische Ausbuchtung (14) übergeht.

4. Sonotrode nach einem der vorgenannten Ansprüche, **dadurch gekennzeichnet, dass** die kegelförmige Aussparung (13) an ihrem nach außen gerichteten Ende von einem umlaufenden Steg (15) mit rechteckigem Querschnitt begrenzt ist.

5. Sonotrode nach einem der vorgenannten Ansprüche, **dadurch gekennzeichnet, dass** die kegelförmige Aussparung (13) hinsichtlich Höhe, Winkel und Durchmesser derart ausgebildet ist, dass sie zu Beginn eines Schweißvorgangs tangential an den Rand des zu verschweißenden Schweißzapfens (22) anliegt.
